Europäisches Patentamt

European Patent Office

Office européen des brevets

(11) Publication number: 0 384 681
A1

# EUROPEAN PATENT APPLICATION

(21) Application number: 90301754.9

(22) Date of filing: 19.02.90

(51) Int. Cl.⁵: A01K 97/12

(30) Priority: 24.02.89 GB 8904244

(43) Date of publication of application:
29.08.90 Bulletin 90/35

(84) Designated Contracting States:
BE DE DK FR GB IT NL SE

(71) Applicant: SILVA ELECTRONICS LTD.,
47 Dinsdale Drive
Eaglescliffe, Cleveland TS16 9HQ(GB)

(72) Inventor: Fechner, Heinz Jurgen Bernhard
63 Chesters Road
Sunderland, Tyne & Wear(GB)

(74) Representative: Virr, Dennis Austin et al
Reid Sharpe Floor B Milburn House Dean
Street
Newcastle upon Tyne NE1 1LE(GB)

(54) Fish bite indicator.

(57) A device for aiding an angler by indicating the presence of a fish on his line comprises a variable capacitor (6; 27) having a fixed plate and a movable plate (5; 26), a deflectable member (4; 25) mechanically linked to the movable plate, and detector means (9) connected to produce an electrical signal in response to variations in the capacitance of the variable capacitor. The device is suitable for attachment to a fishing rod (3), for example for sea fishing, or for mounting (21) upon a bank stick (22) for example for fresh-water fishing.

FIG. 2.

EP 0 384 681 A1

## Fish Bite Indicator

The present invention is a device for aiding an angler by indicating the presence of a fish on his line.

Fish bite indicators for the foregoing purpose which have previously been proposed and/or are at present available have taken various forms. For example, one prior indicator relies upon the movement of a lever over which the angling line is hooked, which movement causes the closing of a set of electrical contacts. Thus movement of the line can generate a signal to advise the angler that this line has moved. In another prior bite indicator, movement of the line causes rotation of a wheel over which the line is led, thereby interrupting a light beam and thus giving rise to a warning signal. Indicators of these types suffer from the serious disadvantage that they are of poor sensitivity, in that a significant movement of the line is necessary before a signal is generated, and that their essentially mechanical nature means that it is not possible to adjust their sensitivity in response to varying conditions of use.

An alternative approach which has been suggested is to provide an antenna or similar deflectable member upon which a piezoelectric element or crystal is mounted and to divert the fishing line to one side of the antenna, so that movement of the antenna by the line may produce a signal. It is believed that no fish bite indicator has successfully been made available relying upon this proposed approach.

Thus there remains a need for a fish bite indicator which is of improved sensitivity as compared with currently available indicators and which of its nature lends itself to being suitable for design in a form having variable sensitivity. It is an object of the present invention to provide a novel fish bite indicator which meets this need.

The fish bite indicator according to the present invention comprises a variable capacitor having a fixed plate and a movable plate, a deflectable member mechanically linked to the movable plate, and detector means connected to produce an electrical signal in response to variations in the capacitance of the variable capacitor.

In use of the fish bite indicator according to the invention, the fishing line is passed over the deflectable member and any movement in the fishing line causes the member to vibrate and thereby causes a change in the capacitance of the variable capacitor. In this way, a very small movement in the line gives rise to a signal and thus very sensitive detection of a bite on the line is achieved. In addition, by varying the selectivity of response of the detector means to the signal and/or varying the amplification of the signal in the detector circuit, the sensitivity of the bite indicator may be adjusted in use.

While any variable capacitor of appropriate rating and sensitivity may be used for the fish bite indicator of the present invention, in one particularly preferred embodiment the capacitor is an electret condenser microphone. Microphones of this type comprise a fixed plate and a membrane (the movable plate of the capacitor) disposed on the opposite sides of the permanently polarised dielectric material known as electret. Vibration of the deflectable member resulting from movement of the fishing line vibrates the membrane of the microphone and thus varies the effective capacitance of the microphone. The variation of the capacitance is reflected in a voltage fluctuation proportional to the amount of movement of the line.

The deflectable member may be mechanically secured to the movable plate of the variable capacitor, for example by soldering, or may simply be urged into contact with the movable plate by suitable spring pressure.

The bite detector will normally be contained within a compact housing, preferably of relatively lightweight material such as nylon or another synthetic polymeric material, while exposing the deflectable member at least to the extent necessary to allow the line to pass in contact with it. Thus the deflectable member may for example project from the housing in the form of a hook over which the line may be passed or may be located within a slot in the housing adapted to receive the line. The housing itself may be designed to be attached to a fishing rod, for example by the provision of a buckle or strap to encircle the rod, or may be independent of the rod, for example by being mounted upon a bank stick such as is often used for fresh-water angling.

Power for the variable capacitor and for the electrical circuitry by means of which the signals arising are processed is preferably incorporated within the housing, although an independent source of power may be provided if desired. Conveniently the power is provided by means of a battery or a solar cell or the normal source of power may be a rechargeable battery charged by the solar cell.

The signals produced by the bite indicator will depend to a considerable extent upon the conditions in which it is being used. Thus movement of the deflectable member may be caused by influences on the line and/or on the fish bite indicator other than the presence of a fish on the line. In one particularly preferred form of the present invention, the signal produced by the detector means is filtered so as to exclude frequencies indicative of influences other than fish bites.

To explain this more fully, it may be observed that movements of the line by natural means, for example by waves (in the case of sea-angling), currents and wind, are mainly slow, low-frequency movements of relatively high power. Movements caused by a fish taking bait and trying to move away from the line are faster and more erratic. Thus by filtering of the signal it is possible to distinguish fish bites from other movements.

Signals produced from a variable condenser as described are of a high impedance and very small amplitude. In order to use the signal to give an effective warning of a bite, it is therefore necessary to amplify and buffer the signal electronically before submitting it to further processing. Suitable circuitry for this purpose is readily devised. One suitable circuit is described hereinafter in connection with two alternative preferred embodiments of the invention and comprises, in combination, the sensor, an amplifier, a filter, a level detector, a power source and audible and visual indicators.

The function of the level detector in the foregoing circuit is to prevent the audible and visual indicators responding to spurious signals below a predetermined value. Preferably the level detector is variable to enable the signal level at which the indicators are activated, that is the sensitivity of response of the bite indicator, to be modified to take account of ambient conditions.

The invention will now be further described, by way of example only, with reference to the accompanying drawings, wherein:-

Fig. 1 illustrates, in sectional view from one side, a first embodiment of the bite indicator according to the present invention, devised for use for sea angling;

Fig. 2 is a sectional view from one end of the bite indicator of Fig. 1;

Fig. 3 is an elevation from one side of a second embodiment of the bite indicator according to the present invention, incorporated in a bank stick for freshwater fishing;

Fig. 4 is an elevation from the front of the bite indicator of Fig. 3; and

Fig. 5 illustrates an electrical circuit suitable for use in the bite indicators of the foregoing figures.

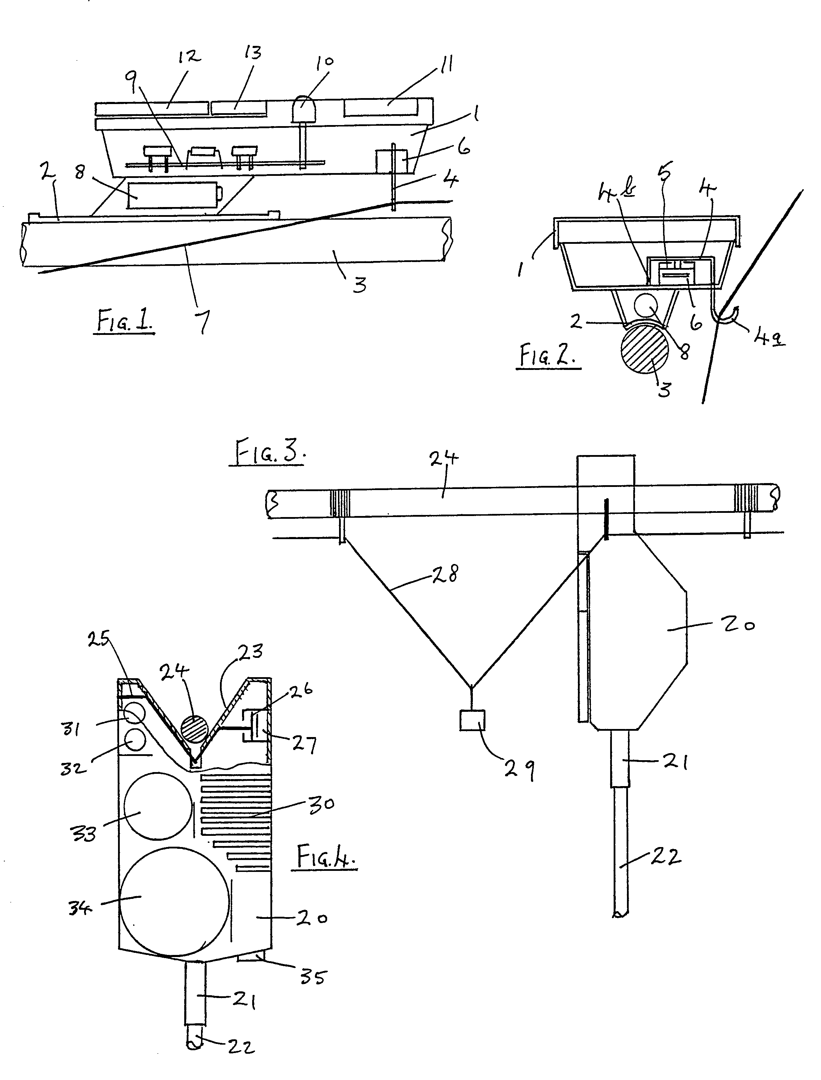

Referring firstly to Figs. 1 and 2, the illustrated bite indicator comprises a light-weight moulded nylon housing 1 supported upon a bracket 2 by means of which the bite indicator may be mounted upon a sea fishing rod 3. Extending outwardly from the underside of the housing 1 is the hooked end 4a of a deflectable member 4, which is secured at its other end 4b within the housing and is directly connected to the membrane or diaphragm 5 of an electret condenser microphone 6. The line 7 of the fishing rod 3 is diverted from its normal path to pass over the hook 4a. Thus any movement of the fishing line 7 causes vibration of the hook 4a and in turn vibrates the membrane 5.

Power is supplied to the microphone 6 from a battery 8 within the housing 1 and the signal resulting from the changes in the capacitance of the microphone by vibration of its membrane 5 is processed in an electronic circuit 9. Signals in excess of a predetermined value activate both a visual indicator 10 and an audible alarm 11. The sensitivity of the bite indicator, that is the level of signal required to activate the visual and audible warnings, may be adjusted by means of a sensitivity control 12. The tone of the audible alarm 11 is adjustable by means of a tone control 13.

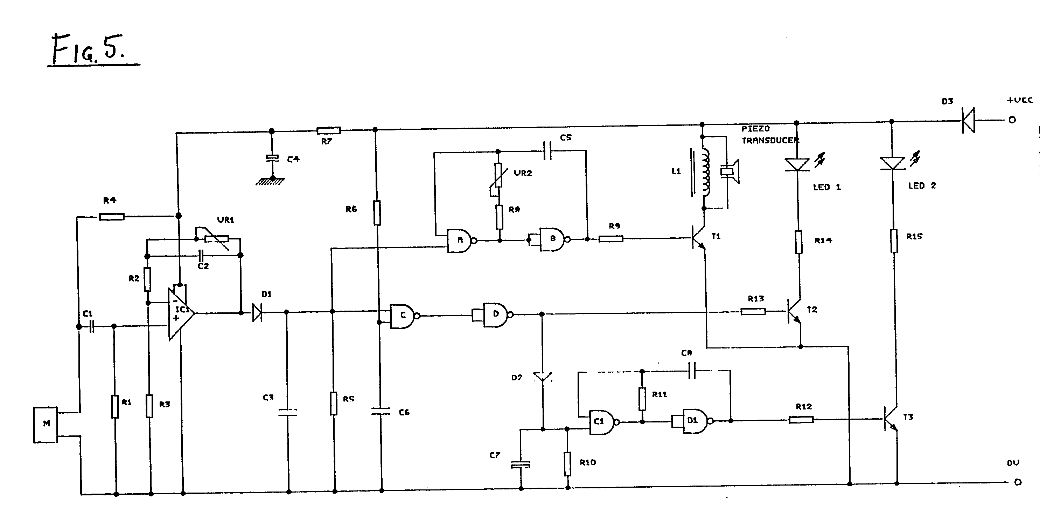

The fresh-water bite indicator illustrated in Figs. 3 and 4 comprises a housing 20 having a tubular socket 21 by means of which the unit may be mounted upon a bank stick 22. A V-shaped notch 23 in the upper end of the housing 20 is designed to support a fishing rod 24.

Mounted within the housing 20 is an angular deflectable member 25, which extends across the bottom of the notch 23 and is secured at one end to the membrane 26 of an electret condenser microphone 27. The fishing line 28 of the rod 24 rests upon the deflectable member 25 at the bottom of the notch 23 and is tensioned in use by a small weight 29 hung upon the line.

In the manner already described, any movement of the line 28, by vibrating the deflectable member 25 and in turn the membrane 26, gives rise to a signal which is processed to activate both a visual alarm and also an audible alarm 30. The visual alarm comprises two warning lights 31 and 32. A red light 31 gives a momentary indication of a movement on the line while the green light 32 is a latched indication of a movement and remains illuminated until cancelled.

Controls 33 and 34 are for adjustment of the tone of the audible warning and for varying the sensitivity of the bite indicator respectively. A further knob 35 controls the volume of the audible warning.

The circuit illustrated in Fig. 5 illustrates one preferred way of creating and processing the signal and is suitable for use with either of the illustrated forms of the bite indicator according to the invention. DC electrical energy at 9 or 12 volts is supplied to the circuit at the terminals marked +VCC and OV from a battery within the housing of the bite indicator. The electret condenser microphone 6 or 27 is indicated in Fig. 5 by the symbol M.

Signals generated in the microphone M are first amplified and buffered in an amplifier consisting of the integrated circuit IC1, the resistors R2 and R3, the capacitor C2 and the variable resistor VR1. The latter resistor is controlled by the sensitivity control 12 or 34 to adjust the sensitivity of the bite indicator. The capacitor C2 acts as a filter to attenuate signals above the frequency which corresponds to the pull of a fish on the line, while the capacitor C1 is a DC blocking capacitor and also a filter to attenuate undesired low-frequency signals.

The signal emerging from the amplifier is passed to level detectors which form parts of the three warning circuits, namely an audio oscillator, a momentary visual indicator and a latched visual indicator.

The audio oscillator consists of gates A and B, the resistor R9, the variable resistor VR2 (by which the tone of the audible alarm is adjusted) and the capacitor C5. The sound is used to drive a piezo buzzer or speaker via T1 and L1.

The latched visual indicator consists of the gates C1 and D1, diode D2, capacitor C7, resistors R10 and R11 and the capacitor C8. Capacitor C7 and resistor R10 form a timing circuit which, when charged via diode D2, activates an oscillator formed by gates C1 and D1, resistor R11 and capacitor C8. The oscillator remains active and flashes light-emitting diode LED2 (the light 32) via transistor T3 until the capacitor C7 is discharged via resistor R10.

The gates C and D activate the light-emitting diode LED1 (the light 31) via transistor T2 to give a momentary visual indication of a bite.

The capacitor C3 and resistor R5 simply elongate the signal from the amplifier circuit IC1. The resistor R6 and capacitor C6 ccoperate to ensure that the bite indicator powers up in an orderly fashion when first switched on. The resistor R7 and capacitor R4 stabilise the power supply to the amplifier circuit to prevent the device latching into an indicating mode.

As can be seen, fish bite indicators according to the present invention may be constructed in a highly compact form to perform a highly selective bite-detecting function of high and variable sensitivity.

**Claims**

1. A fish bite indicator having a deflectable member responsive to movement of a fishing line, characterised in that it comprises a variable capacitor (6; 27) having a fixed plate and a movable plate (5; 26), that the deflectable member (4; 25) is mechanically linked to the movable plate of the variable capacitor, and by detector means (9) connected to produce an electrical signal in response to variations in the capacitance of the variable capacitor.

2. A fish bite indicator according to claim 1, characterised in that the variable capacitor is an electret condenser microphone (6; 27).

3. A fish bite indicator according to claim 1 or 2, characterised in that the deflectable member (4; 25) is mechanically secured to the movable plate (5; 26) of the variable capacitor (6; 27).

4. A fish bite indicator according to claim 1 or 2, characterised in that the deflectable member is urged into contact with the movable plate of the variable capacitor by spring pressure.

5. A fish bite indicator according to any of the preceding claims, characterised in that it is contained in a housing (1; 20) with the deflectable member (4; 25) at least partly exposed.

6. A fish bite indicator according to claim 5, characterised in that the deflectable member (4) projects from the housing (1) in the form of a hook (4a).

7. A fish bite indicator according to claim 5, characterised in that the deflectable member (25) is located within a slot (23) in the housing (20) adapted to receive a fishing line (28).

8. A fish bite indicator according to any of the preceding claims, having means (2) for attaching it to a fishing rod (3).

9. A fish bite indicator according to any of claims 1 to 7, which is mounted or adapted to be mounted (21) upon a bank stick (22).

10. A fish bite indicator according to any of the preceding claims, characterised in that it includes a battery (8).

11. A fish bite indicator according to any of the preceding claims, characterised in that it includes a filter to exclude preselected frequencies from the signal produced by the detector means.

12. A fish bite indicator according to any of the preceding claims, characterised in that it includes circuitry to amplify and buffer the signal produced by the detector means.

13. A fish bite indicator according to claim 12, characterised in that the circuitry comprises, in combination, a signal sensor, an amplifier, a filter, a level detector, a power source and audible and visual indicators.

14. A fish bite indicator according to claim 13, characterised in that the level detector is variable.

P90426

Fig. 1.

Fig. 2.

Fig. 3.

Fig. 4.

Fig. 5.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| P,X | GB-A-2209911 (CRUZ) <br> * page 2, line 18 - page 6, line 17; figures * <br> --- | 1-3, 5, 7, 9, 12, 13 | A01K97/12 |
| P,X | GB-A-2219181 (JOHN) <br> * the whole document * <br> --- | 1, 3, 5, 7, 9, 10, 12, 13 | |
| P,A | EP-A-325444 (PECK) <br> * page 3, line 24 - page 13, line 48; figures 1-6 * <br> --- | 5, 7, 9, 10, 12, 12, 14 | |
| A | GB-A-2149631 (I & C CARBONITE LIMITED) <br> --- | | |
| A | GB-A-1596260 (DELLAREED LIMITED) <br> ----- | | |

TECHNICAL FIELDS
SEARCHED (Int. Cl.5 )

A01K

The present search report has been drawn up for all claims

| Place of search | Date of completion of the search | Examiner |
|---|---|---|
| THE HAGUE | 10 MAY 1990 | VERDOODT S.J.M. |

EPO FORM 1503 03.82 (P0401)